# DEMANDE DE BREVET EUROPEEN

(11) **EP 1 382 821 A1**
(43) Date de publication de la demande: **21.01.2004**
(21) Numéro de dépôt: 03291777.5
(22) Date de dépôt: 17.07.2003
(51) Int. Cl.: F02D 41/02, F01N 3/08

(54) **Procédé d'aide à la régénération d'un filtre des gaz d'échappement sur un moteur d'automobile**

(30) Priorité: 18.07.2002 FR 0209116
(71) Demandeur: Renault s.a.s., 92100 Boulogne Billancourt (FR)
(72) Inventeur: Philippe, Laurent, 91510 Lardy (FR)

(57) **Abrégé**

Selon la mesure d'une sonde de température (15), des échauffements des gaz d'échappement peuvent être décidés à la régénération d'un filtre (7) pour la faciliter. On procède en retardant la combustion dans le cycle de cadencement du moteur (1), notamment en diminuant le débit d'air qui lui parvient au moyen d'un surcroît de fermeture d'un volet (16) disposé dans le collecteur d'admission (3).

## Description

Le sujet de cette invention est l'aide à la régénération d'un filtre des gaz d'échappement sur un moteur d'automobile.

Il existe divers moyens, tels que des filtres de purification des gaz d'échappement, dans lesquels certains des gaz d'échappement sont stockées et ainsi empêchés de s'échapper dans l'atmosphère. Quand ces filtres sont saturés, ils doivent être régénérés par une opération spéciale qui détruit les impuretés et rend le filtre capable d'en retenir d'autres à nouveau. Ainsi, de nombreux éléments nocifs, notamment les nitrates oxydes d'azote NO_{X}, sont détruits par une réaction chimique de réduction que peut produire un accroissement temporaire de la richesse du mélange fourni au moteur au-delà de la stoechiométrie, qui augmente la quantité d'espèce réductrices telles que HC, CO et H₂ tout en diminuant l'oxygène dans les gaz.

On constate toutefois que la plupart des filtres sont insuffisament régénérés si leur température est inférieure à 250°C environ (du moins pour les pièges à NOx), ce qu'on observe aux faibles charges du moteur, quand les gaz d'échappement ne donnent qu'une énergie calorifique insuffisante. L'application des procédés connus consiste à poursuivre la régénération pendant un temps plus long, mais la surconsommation de carburant devient importante et des polluants hydrocarbonés sont relâchés en grande quantité dans l'atmosphère.

Dans l'invention, il est proposé une meilleure façon de soutenir la régénération de filtres des gaz même à faible charge du moteur, en provoquant un accroissement de la température du filtre jusqu'à atteindre des valeurs convenables pour faciliter la régénération.

Pour résumer, l'invention concerne un ensemble à moteur d'automobile comprenant, outre le moteur, un collecteur d'admission d'air et un collecteur d'échappement de gaz se branchant au moteur, un filtre des gaz sur le collecteur d'échappement, et des moyens de régénération périodique du filtre des gaz, caractérisé en ce qu'il comprend un moyen de retardement de combustion dans le moteur, et des moyens de décision pour mettre en service le moyen de retardement de combustion à l'occasion d'une régénération du filtre des gaz, afin d'en faciliter sa régénération complète.

Dans la réalisation principalement envisagée, le moyen de retardement de combustion dans le moteur comprend un volet d'étranglement mobile dans le collecteur d'admission.

L'invention sera maintenant décrite en référence aux figures suivantes :

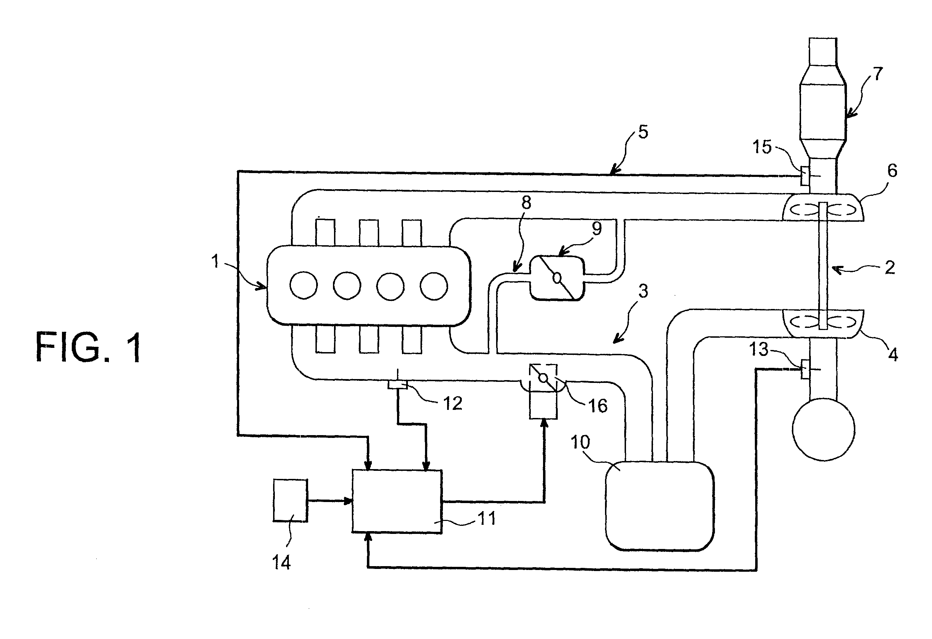

- la figure 1 est une vue d'ensemble de l'invention,
- la figure 2 illustre le procédé de commande,
- et la figure 3 illustre certains résultats.

La réalisation représentée est relative à un moteur diesel 1 suralimenté par un turbocompresseur 2, sans que l'invention soit exclusive de moteurs alimentés à la pression atmosphérique ni de moteurs à essence. L'agencement comprend encore un collecteur d'admission d'air 3 sur lequel est disposé le compresseur 4 du turbocompresseur 2, et un collecteur d'échappement 5 sur lequel sont disposées la turbine 6 du turbocompresseur 2 et, en aval, une variété de filtres de gaz tels qu'un piège à oxydes d'azote 7. Les collecteurs 3 et 5 se branchent au moteur 1. Ont également été représentés, quoique sans rapport véritable avec l'invention, une dérivation d'EGR 8 permettant la recirculation des gaz d'échappement 5 et reliant le collecteur d'échappement au collecteur d'admission 3 par une vanne réglable 9, et un échangeur de chaleur 10 disposé sur le collecteur d'admission 3 dans la partie de haute pression pour diminuer l'échauffement de l'air consécutif à sa compression.

Une unité de commande électronique (UCE) 11 non représentée en détail permet de piloter le moteur en réponse aux signaux fournis par certains capteurs, dont on peut signaler, comme étant déjà connus, une sonde de pression 12 au collecteur d'admission 3 non loin du moteur, une sonde de débit d'air 13 à l'entrée du collecteur d'admission 3 ; une estimation de la température fournie par un moyen 14 peut aussi être utilisée. Est plus spécifique à l'invention une sonde de température 15 disposée sur le collecteur d'échappement 5 juste en amont du piège 10 et qui mesure donc la température des gaz d'échappement qui parviennent au piège 7 en aval de la turbine 6. Et surtout, le collecteur d'admission 3 est équipé d'un volet d'étranglement 16 mobile, pouvant par exemple être placé entre l'échangeur de chaleur 10 et le débouché de la dérivation d'EGR 8.

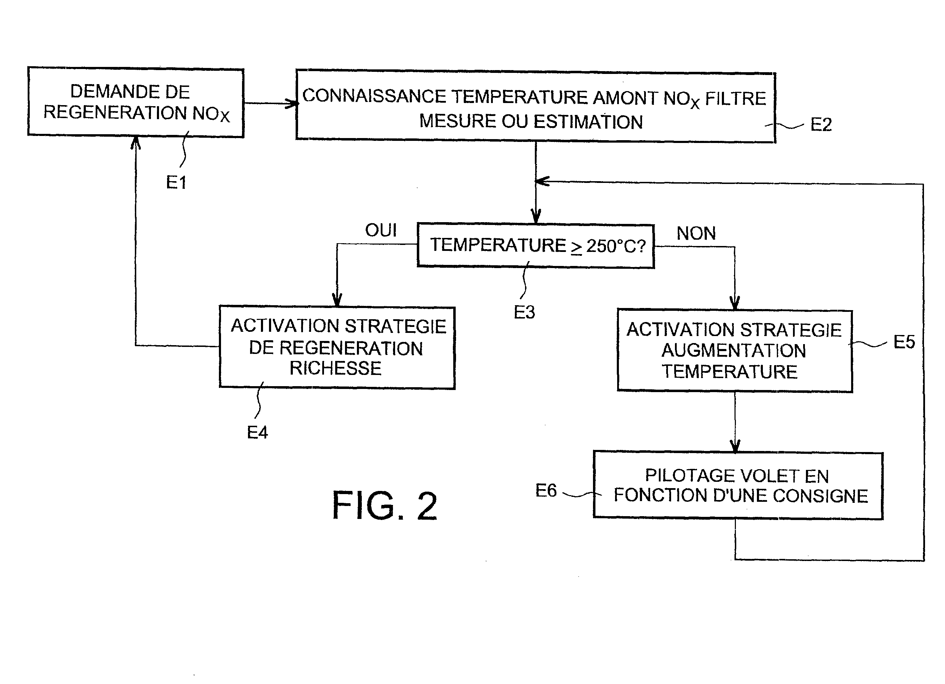

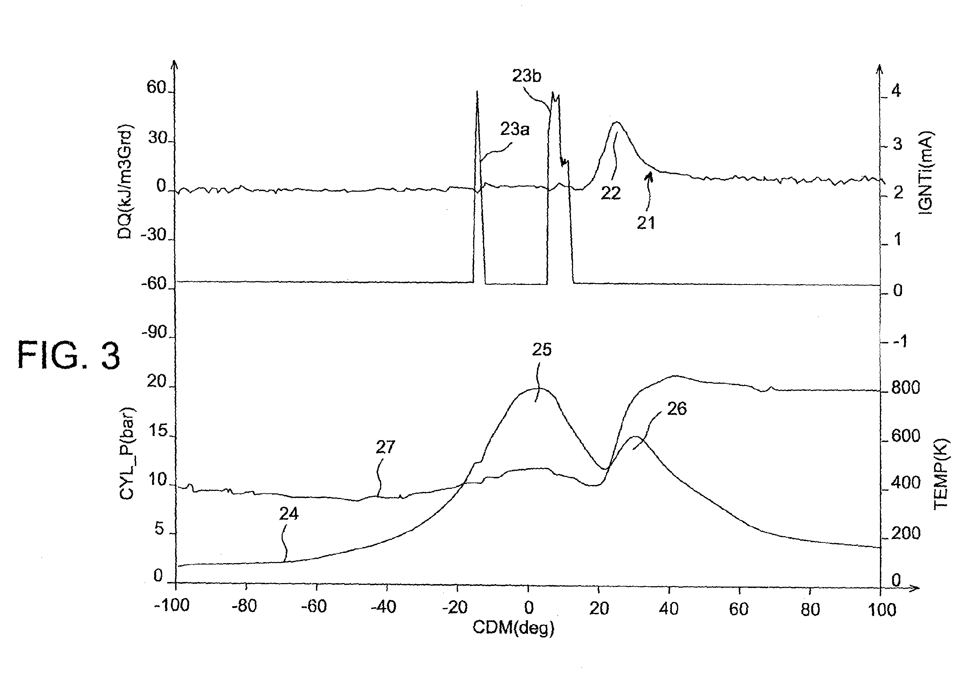

Quand une régénération du filtre 7 est décidée, ce qui peut être fait soit régulièrement, après une longueur déterminée de parcours total du véhicule, ou par la mesure d'une élévation de teneur en oxydes d'azote des gaz en aval du piège 7, montrant que celui-ci est saturé et ne peut plus en retenir, ou encore par une estimation cumulative de la teneur des oxydes d'azote dans le piège 1, l'étape E₁ de la figure 2 est atteinte. La température des gaz d'échappement est alors lue par la sonde de température 15 et communiquée à l'UCE 11, selon l'étape E₂, ou estimée par exemple d'après la vitesse de rotation et le débit de carburant. Si cette température est satisfaisante, par exemple supérieure à 250°C, l'UCE 11 décide (étape E₃) de développer le procédé ordinaire de régénération du filtre 7 en augmentant la richesse du mélange fourni au moteur 1 (étape E₄). Sinon, l'invention est effectivement exploitée et une augmentation spéciale de la température des gaz d'échappement est provoquée (étape E₅). Le volet d'étranglement 16 est quelque peu refermé pour diminuer la quantité d'air parvenant au moteur 1. On observe alors un retard à la combustion dans le cycle du moteur, bien visible sur la paire de courbes supérieures de la figure 3, où on voit qu'un dégagement d'énergie dans le moteur 1 est localisé à un angle de calage compris entre 20° et 30° environ, la courbe 21 exprimant cette énergie formant là une bosse 22, par rapport à une injection (double ici) 23a et 23b de carburant, fournie autour de l'angle de calage à 0°.

Dans la paire de courbes inférieures, l'une d'elles 24 illustre la pression dans les cylindres et montre une double bosse caractéristique, l'une d'entre elles 25 étant présente aux alentours de 0° et d'allure classique, alors que l'autre 26 aux alentours de 30° caractérise l'invention et est attribuée au retard de combustion. La courbe 27 de température dans le cylindre montre un échauffement important, de 400°K à 750°K par exemple, à partir de la deuxième bosse 26, et qui se prolonge pendant un angle de calage important, ce qu'on n'observe pas dans des conditions normales de combustion. Un échauffement sensible des gaz d'échappement est donc réalisé, qui se communique au collecteur d'échappement 5 et au filtre 7. Quand l'invention a été appliquée, la régénération est entreprise de la façon habituelle en revenant à l'étape E4.

Au moins une des sondes 12 au 13 ainsi que l'estimation de température de moyen 14 peut être affectée à un réglage du volet d'étranglement 16, qui est appliqué dans les circonstances habituelles pour asservir le fonctionnement du moteur à des états définis par des cartes de commandes présentes dans l'UCE 11 et exprimant des asservissements ordinaires ; la commande redevable à la sonde 15 replace à la commande habituelle en période de régénération.

## Revendications

1. Ensemble à moteur d'automobile, comprenant, outre le moteur (1) , un collecteur d'admission (3) d'air et un collecteur d'échappement (5) de gaz se branchant au moteur (1), un filtre (7) des gaz sur le collecteur d'échappement, et des moyens de régénération périodique du filtre des gaz, **caractérisé en ce qu'**il comprend un moyen (16) de retardement de combustion dans le moteur, et des moyens de décision (11, 15) pour mettre en service le moyen de retardement de combustion à l'occasion d'une régénération du filtre des gaz.

2. Ensemble à moteur d'automobile selon la revendication 1, **caractérisé en ce que** le moyen de retardement de combustion dans le moteur comprend un volet d'étranglement (16) mobile dans le collecteur d'admission (3).

3. Ensemble à moteur d'automobile selon l'une quelconque des revendications 1 ou 2, **caractérisé en ce qu'**il comprend une sonde de température des gaz d'échappement, faisant partie des moyens de décision.

4. Ensemble à moteur d'automobile selon l'une quelconque des revendications 1 à 3, **caractérisé en ce que** le moyen de décision comprend soit une sonde de pression (12) au collecteur d'admission (3), une sonde de débit d'air (13), ou un moyen (14) d'estimation de température.
